# EUROPEAN PATENT SPECIFICATION

(11) **EP 0 553 880 B1**
(45) Date of publication and mention of the grant of the patent: **09.04.1997**
(21) Application number: 93101457.5
(22) Date of filing: 29.01.1993
(51) Int. Cl.: F24F 13/00

(54) **Hanger for outdoor heat exchanger**
Aufhängung für Aussen-Wärmeaustauscher
Support pour échangeur de chaleur à l'extérieur

(30) Priority: 29.01.1992 KR 921343 U
(43) Date of publication of application: 04.08.1993
(73) Proprietor: SAMSUNG ELECTRONICS CO. LTD., Suwon-city, Kyungki-do (KR)
(72) Inventor: Kil, Yong Hyun, Suweon-City, Kyungki-Do (KR)
(74) Representative: Kahler, Kurt, Dipl.-Ing.

(56) References cited:
- US-A- 3 394 910
- US-A- 4 979 559

## Description

The present invention relates to a hanger for an outdoor heat exchanger of an individual room air conditioner.

The individual room air conditioner is normally provided with an indoor heat exchanger and an outdoor heat exchanger. The outdoor heat exchanger is installed using a hanger at a selective proper outdoor location where it is well ventilated for increasing the efficiency of the heat exchanger and also where air discharged from the outdoor heat exchanger cannot reenter the dwelling and where noise produced by the outdoor heat exchanger is not transferred, i. e. on a side wall, verandah or roof. A hanger for an outdoor heat exchanger is utilized in various ways. The typical hanger is designed with an angle which has a plurality of slots along its own length. The size of the angle is cut depending on the size of the outdoor heat exchanger and assembled for supporting the specific outdoor heat exchanger. Elements of the hanger constitute a horizontal member, a vertical member, and an enforceable member. Elements are assembled with bolts and by using a triangular plate.

However, the above described hanger has the problem that it causes inconvenient manufacture because each member is cut and assembled for fitting a specific individual outdoor heat exchanger. The hanger offers weak support due to the use of the triangle plate for assembling the elements. Furthermore, it has another problem that in case the hanger is mounted on either a wall or a parapet of a verandah, a suitable hanger must be selected to consider the conditions at the desired location.

In US-A-4,979,559 an arrangement for supporting an outdoor heat exchanger is disclosed with the disadvantages as described above.

An object of the present invention is to provide a hanger for an outdoor heat exchanger which may be widely utilized regardless of the size of the outdoor heat exchanger.

Another object is to provide a hanger for an outdoor heat exchanger which can be easily mounted either on a wall or on the parapet of a verandah.

According to the present invention these objects are solved by the hanger as described in claim 1.

A preferred development of the invention is set out in the dependent claim 2.

Preferably, the horizontal portion has a plurality of holes along its length, the vertical portion has wings at each reinforcing connecting point, the connecting member has a plurality of slots at one end along its length and a protruding neck at the central bottom area of each end.

For a better understanding of the invention, reference will now be made, by way of example, to Figures 1 to 4 of the accompanying drawings, in which:
- Fig. 1A: is an assembled perspective view of the hanger without the detail of the outer and inner hanging member;
- Fig. 1B: is an enlarged front view of circle A in Fig. 1A;
- Fig. 2: is an assembled perspective view of the hanging means of the hanger according to the present invention; and
- Fig. 3: is a side elevational view of the embodiment of the present invention.

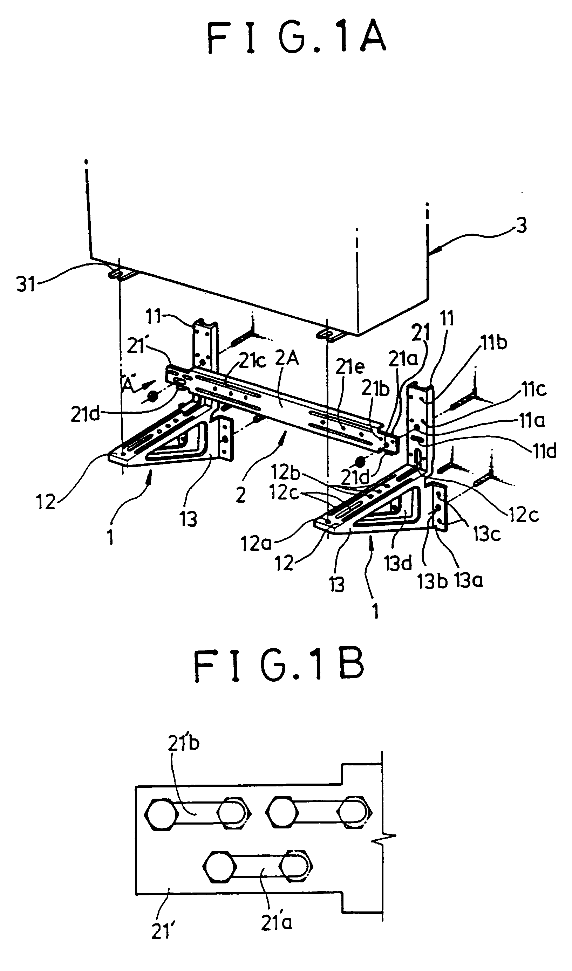

Figs. 1A and 1B illustrate part of a hanger according to the present invention.

The hanger comprises a pair of supporting member 1 and a connecting member 2. Each supporting member 1 is constructed with a channel, and comprises a vertical portion 11 and a horizontal portion 12 which integrally extends from the lower end of the vertical portion 11 at a 90° angle. The supporting member 1 further comprises a reinforcing portion 13 which is integrally constructed such that both front side ends of the horizontal portion 12, respectively, extend downward to the rear ends of the horizontal portion 12. An assembling hole 11c is formed in the upper area adjacent to the hole 11a and a slot 11d is formed in the lower area adjacent to the hole 11a, both of which are for attaching the connecting member 2.

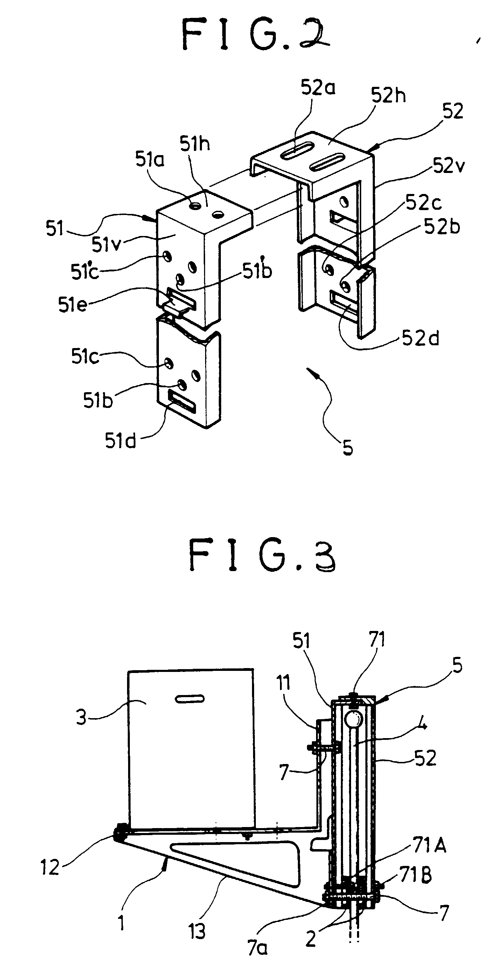

In the horizontal portion 12, a fastening hole 12a is formed at the front end thereof such that the fastener 31 of an outdoor heat exchanger 3 is engaged by a fastening means 7. A plurality of fastening holes 12b are formed in the rear area of the horizontal portion 12 but forwardly spaced away from the outer surface of the vertical portion 11 as shown in Fig. 2, to engage the outdoor heat exchanger 3 thereon using a fastening means 32. Reinforcing slots 12c are formed between the fastening hole 12a and the front hole among a plurality of fastening holes 12b to enforce the supporting member 1, and also adjacent to both longitudinal side edges. An additional reinforcing slot 12c is formed at the bending area along the rear of the horizontal portion 12 and the lower part of the vertical portion 11.

In the reinforcing portion 13, an opening 13d is formed at each side plate except within a predetermined area formed along the perimeter of the reinforcing portion 13. A pair of wings 13a extend outwardly from each rear edge of the reinforcing portion 13 at a 90° angle. A rear surface, i. e. the hanger surface facing the wall, of the wing 13a is placed at a same level as the rear surface of the vertical portion 11. A hole 13b, respectively, is provided in the middle area of the wing 13a for receiving an anchor bolt 61 which is then inserted into a wall 6. An auxiliary hole 13c is provided in the upper area of the wing 13a and in the lower area of the wing 13a for attaching to a wall 6 using concrete nails in order to obtain sufficient support.

The connecting member 2 is constructed with a channel and has an assembling portion 21, 21' formed at each end thereof, respectively. A protruding neck 21d is formed at the central bottom area of the assembling portion 21, 21' for inserting into the slot 11d. The width of the protruding neck 21d is narrower than that of the slot 11d so that a horizontal installation can be made. An assembling hole 21b is provided at both sides of the upper area of the assembling portion 21 for attaching the connecting member 2 to the vertical portion 11 using the fastening means 7. At the assembling portion 21' as shown in Fig. 1B, a slot hole 21'a and a pair of slot holes 21'b are provided for rendering a flexible span between the supporting members 1. Reinforcing slots 21c, respectively, are formed both above and below a plurality of holes 21e.

Fig. 4 illustrates the details of the hanging means according to the embodiment of a hanger present invention.

The hanger comprises a pair of supporting members 1 and a pair of connecting members 2 as described in the first embodiment. As shown in Fig. 3, the hanger further comprises a hanging means 5 which consists of an inner hanging member 52 and an outer hanging member 51. The inner hanging member 52 comprises a vertical portion 52v and a horizontal portion 52h which is an integral top part of the vertical portion 52v. The outer hanging member 51 comprises a vertical portion 51v and a horizontal portion 51h which is an integral top part of the vertical portion 51v. At the front surface of the vertical portion 51v of the outer hanging member 51 a protruding neck 51e is provided for inserting into slot 11d of the supporting member 1 (Fig. 1A). A hole 51b is provided in the central area of the vertical portion 51v for receiving a fastening means 7 which assembles both the inner hanging member 52 and the outer hanging member 51. Assembling holes 51c are formed at the upper portion adjacent to the hole 51b for attaching the connecting member 2 to the vertical portion 51v.

In a similar manner, a hole 52b and assembling holes 52c are provided at the lower area of the vertical portion 52v of the inner hanging member 52. To increase the methods of mounting to accommodate various balcony parapet, a hole 51'b and assembling holes 51'c are formed in the upper area of the vertical portion 51v. Further, the same configuration of holes may be provided in the upper area of the vertical portion 52v. Slots 51d, 52d, respectively, are formed in the bottom area of the vertical portion 51v, 52v for engaging the protruding neck 21d of the connecting member 2.

Further, in the event that the protruding neck 21d interferes with slots 51d, 52d, the slots may be replaced with a notch. A pair of fastening holes 51a are formed in the central area of the horizontal portion 51h. A pair of fastening holes 52a are formed in the central area of the horizontal portion 52h and are shaped in the form of a slot to allow proper installation of the hanging means 5 on a parapet of a balcony regardless of the size of any given parapet.

The hanger for an outdoor heat exchanger of the invention is installed as follows, with reference to the figures.

When mounting on a parapet 4 of a balcony as shown in Fig. 4, the protruding neck 51e of the outer hanging member 51 is inserted into the slot 11d of the supporting member 1 (Fig. 1A). The supporting member 1 and the outer hanging member 51 are assembled using the fastening means 7 which are inserted through the holes 51'c, 11c. Since the left side, i. e. the assembling portion 21' of the connecting member 2, has a slot shaped hole 21'b, the seating position of the fastening means 7 provides flexibility to accommodate various sizes of outdoor heat exchangers 3. Next, the connecting member 2 is attached to the lower area of the outer hanging member 51 and is assembled by the first fastening means 71A. In the same manner, another connecting member 2 is attached to the inner hanging member 52 and is assembled by the second fastening means 71B.

The horizontal portion 51h of the assembled outer hanging member 51 is placed on the upper side of the parapet 4, with the horizontal portion 52h of the assembled inner hanging member 52 being superposed thereon. According to the width of the parapet 4, the fixing position of the slot 52a with respect to the hole 51a is flexibly determined. The horizontal portions 51h, 52h are assembled using the fastening means 71. According to the above procedure, the hanger is installed on a parapet of a balcony.

According to the hanger as described above, an outdoor heat exchanger is supported with sufficient supporting strength. Further, the range of use of the hanger is greatly expanded regardless of the size of the outdoor heat exchanger. The hanger can easily be mounted at a location such as on the wall or on the parapet of a balcony.

## Claims

1. A hanger for supporting an outdoor heat exchanger on a parapet of a balcony (3), comprising:
at least two supporting members (1) each having:
a vertical portion (11);
a horizontal portion (12) integrally extended from the lower end of said vertical portion (11);
a reinforcing portion (13) integrally extended from both front side ends of said horizontal portion (12), respectively, slantingly downward to the rear ends of said horizontal portion (12);
**characterized by**
a connecting member (2) connecting said supporting members (1); and
at least two hanging means (5) each having:
an outer hanging member (51) attached to said vertical portion (11) of said supporting member (1) and attached to said connecting member (2), and
an inner hanging member (52) attached to another connecting member (2); wherein
said outer hanging member (51) comprises a vertical portion (51v) and a horizontal portion (51h) integrally extending from the top end of said vertical portion (51v);
said inner hanging member (52) comprises a vertical portion (52v) and a horizontal portion (52h) integrally extending from the top end of said vertical portion (52v);
said vertical portion (51v) of said outer hanging member (51) has a protruding neck (51e) for inserting into a slot (11d) in the upper area of said vertical portion (11) of said supporting member (1); and
either said horizontal portion (52h) of said inner hanging member (52) or that of said outer hanging member (51) has slots (52a) for adjusting the span between said vertical portions (51v, 52v) of said hanging member (51, 52).

2. A hanger according to claim 1, wherein:
said horizontal portion (11) has a plurality of holes (12b) along its length;
said vertical portion (11) has wings (13a) at each connecting point with said reinforcing portion (13);
said connecting member (2) has a plurality of slots (21'a, 21'b) at one end along its length and a protruding neck (21d) at the central bottom area of each end.

## Patentansprüche

1. Aufhängevorrichtung zum Abstützen eines Außen-Wärmeaustauschers (3) an einem Geländer eines Balkons, aufweisend:
zumindest zwei Abstützelemente (1), von denen jedes aufweist:
ein vertikales Teil (11);
ein horizontales Teil (12), das einstückig von dem unteren Ende des vertikalen Teils (11) wegragt;
ein Verstärkungsteil (13), das entsprechend einstückig von beiden Seitenenden des horizontalen Teils (12) zu den hinteren Enden des horizontalen Teils (12) schräg abwärts wegragt;
**gekennzeichnet** durch
ein Verbindungselement (2), das die Abstützelemente (1) verbindet; und
zumindest zwei Aufhängeeinrichtungen (5), die jeweils aufweisen:
ein äußeres Aufhängeelement (51), das an dem vertikalen Teil (11) des Abstützelements (1) befestigt ist und an dem Verbindungselement (2) befestigt ist, und
ein inneres Aufhängeelement (52), das an dem anderen Verbindungselement (2) befestigt ist; wobei
das äußere Aufhängeelement (51) ein vertikales Teil (51v) und ein horizontales Teil (51h) aufweist, das einstückig von dem oberen Ende des vertikalen Teils (51v) wegragt;
das innere Aufhängeelement (52) ein vertikales Teil (52v) und ein horizontales Teil (52h) aufweist, das von dem oberen Ende des vertikalen Teils (52v) wegragt;
das vertikale Teil (51v) des äußeren Aufhängeelements (51) einen abstehenden Ansatz (51e) zum Einsetzen in einen Schlitz (11d) in dem oberen Bereich des vertikalen Teils (11) des Abstützelements (1) aufweist; und
entweder das horizontale Teil (52h) des inneren Aufhängeelements (52) oder das des äußeren Aufhängeelements (51) Schlitze (52a) zum Einstellen der Spannweite zwischen den vertikalen Teilen (51v, 52v) der Aufhängeelemente (51, 52) aufweist.

2. Eine Aufhängevorrichtung nach Anspruch 1, wobei:
das horizontale Teil (11) eine Vielzahl von Löchern (12b) längs seiner Länge aufweist;
das vertikale Teil (11) Flügel (13a) an jedem Verbindungspunkt mit dem Verstärkungsteil (13) aufweist;
das Verbindungselement (2) eine Vielzahl von Schlitzen (21'a, 21'b) an einem Ende längs seiner Länge und einen abstehenden Ansatz (21d) an der zentralen Bodenfläche jedes Endes aufweist.

## Revendications

1. Support destiné à supporter un échangeur de chaleur (3) situé à l'extérieur sur un parapet de balcon, comprenant :
au moins deux éléments de support (1) comportant chacun :
une partie verticale (11),
une partie horizontale (12) se prolongeant intégralement à partir de l'extrémité inférieure de ladite partie verticale (11),
une partie de renforcement (13) s'étendant intégralement depuis les deux extrémités latérales avant de ladite partie horizontale (12), respectivement, en descendant en pente jusqu'aux extrémités arrière de ladite partie horizontale (12),
caractérisé par
un élément de liaison (2) reliant lesdits éléments de support (1), et
au moins deux moyens de suspension (5) comportant chacun :
un élément extérieur de suspension (51) attaché à ladite partie verticale (11) dudit élément de support (1) et attaché audit élément de liaison (2), et
un élément intérieur de suspension (52) attaché à un autre élément de liaison (2), où :
ledit élément extérieur de suspension (51) comprend une partie verticale (51v) et une partie horizontale (51h) s'étendant intégralement à partir de l'extrémité supérieure de ladite partie verticale (51v),
ledit élément intérieur de suspension (52) comprend une partie verticale (52v) et une partie horizontale (52h) s'étendant intégralement à partir de l'extrémité supérieure de ladite partie verticale (52v),
ladite partie verticale (51v) dudit élément extérieur de suspension (51) comporte une patte saillante (51e) destinée à être introduite dans une fente (11d) dans la partie supérieure de ladite partie verticale (11) dudit élément de support (1), et
soit ladite partie horizontale (52h) dudit élément intérieur de suspension (52), soit celle dudit élément extérieur de suspension (51) comporte des fentes (52a) permettant de régler l'écartement entre lesdites parties verticales (51v, 52v) dudit élément de suspension (51, 52).

2. Support selon la revendication 1, dans lequel :
ladite partie horizontale (11) comporte une pluralité de trous (12b) sur sa longueur,
ladite partie verticale (11) comporte des ailes (13a) au niveau de chaque point de liaison avec ladite partie de renforcement (13),
ledit élément de liaison (2) comporte une pluralité de fentes (21'a, 21'b) à une extrémité suivant sa longueur, et une patte saillante (21d) au niveau de la partie centrale inférieure de chaque extrémité.
